Europäisches Patentamt

European Patent Office

Office européen des brevets

(11) Veröffentlichungsnummer: **0 190 206**
**B1**

(12) **EUROPÄISCHE PATENTSCHRIFT**

(45) Veröffentlichungstag der Patentschrifft:
**17.01.90**

(21) Anmeldenummer: **85903655.0**

(22) Anmeldetag: **25.07.85**

(86) Internationale Anmeldenummer:
**PCT/DE 85/00250**

(87) Internationale Veröffentlichungsnummer:
**WO 86/00961 (13.02.86 Gazette 86/04)**

(51) Int. Cl. $^4$: **F 02 D 41/14, F 02 D 41/40, F 02 D 21/08**

(54) EINRICHTUNG ZUR MESSUNG UND REGELUNG VON BETRIEBSDATEN VON VERBRENNUNGSMOTOREN.

(30) Priorität: **01.08.84 DE 3428371**

(43) Veröffentlichungstag der Anmeldung:
**13.08.86 Patentblatt 86/33**

(45) Bekanntmachung des Hinweises auf die Patenterteilung:
**17.01.90 Patentblatt 90/03**

(84) Bennante Vertragsstaaten:
**AT CH DE FR GB IT LI NL SE**

(56) Entgegenhaltungen:
**EP-A-0 071 557**
**DE-A-2 554 988**
**FR-A-2 323 895**
**GB-A-1 512 213**
**US-A-3 744 461**

(73) Patentinhaber: **ROBERT BOSCH GMBH**
**Postfach 50**
**D-7000 Stuttgart 1 (DE)**

(72) Erfinder: **HÄBICH, Andreas**
**Blumenstrasse 65**
**D-7016 Gerlingen (DE)**
Erfinder: **MUTSCHLER, Bernhard**
**Bannwaldweg 6**
**D-7016 Gerlingen (DE)**

**Beschreibung**

**Stand der Technik**

Die Erfindung geht aus von einer Einrichtung nach der Gattung des Anspruchs 1 bzw. 2. Es sind bereits Ionenstromsonden bekannt, die z. B. zur Feststellung und Regelung des Zündzeitpunktes bei Otto-Motoren (DE-OS-2 935 725) oder zur Erfassung von Druckschwankungen zur Erkennung klopfender Verbrennungen (DE-OS-2 802 202) dienen. Diese Sonden arbeiten jedoch mit hohen Feldstärken von über 1 000 V pro Zentimeter und sind auch aufgrund ihrer sonstigen Merkmale nicht zur Schadstoffbestimmung im Brenngas geeignet.

In der EP-A-0 071 557 wird ein Verfahren zur Messung und Regelung von Betriebsdaten von Verbrennungsmotoren unter Ausnutzung der Ionisierung von Gasen bei hohen Temperaturen beschrieben. Aus der Messung der Leitfähigkeit des Gases in der Brennraumkammer wird gemäß dieser Druckschrift beispielsweise der Beginn der Verbrennung bestimmt. Mittels zweier weiterer Sensoren wird die Drehzahl der Brennkraftmaschine sowie die Last bestimmt. Die Daten des Drehzahl- und des Lastsensors sowie der Ionenstromsonde werden in einer Kontrolleinrichtung ausgewertet und zur Regelung des Verbrennungsmotors verwendet. Da mehrere Sensoren, nämlich ein Drehzahl-, ein Last- und ein Ionenstromsensor, verwendet werden, ist dieses Verfahren zur Messung und Regelung eines Verbrennungsmotors sehr kostenaufwendig.

Aus der GB-PS-1 512 213 ist ein Verfahren zur Messung und/oder Regelung von Betriebsdaten von Verbrennungsmotoren, beispielsweise Abgasrückführung, unter Ausnutzung der Ionisierung von Gasen bei hohen Temperaturen bekannt. Dazu wird durch die Messung der elektrischen Leitfähigkeit des im Brennraum vorhandenen ionisierten Gases der Brennbeginn und die Brenndauer bestimmt und zusammen mit der Drehzahl, die über einen Impulsgeber an der Kurbelwelle ermittelt wird, zur Regelung herangezogen.

Aus der US-A-3 744 461 ist eine weitere Ionensonde bekannt, mit der der Rußgehalt im Abgas einer Brennkraftmaschine gemessen wird. Die Signale der Ionenstromsonde werden jedoch nicht zu einer umfassenden Motorregelung herangezogen, sondern lediglich zur Verringerung der Rußemission.

Die Aufgabe der vorliegenden Erfindung ist, die Meßmöglichkeiten von Ionenstromsonden in einem Motor über den bekannten Stand hinaus so zu erweitern, daß Schadstoffe wie z. B. Ruß bereits im Motor nachgewiesen werden und zur Regelung von Betriebsparametern wie beispielsweise der Abgasrückführung, genutzt werden können. Weiterhin sollen mit derselben Ionenstromsonde eine Vielzahl anderer Parameter wie beispielsweise die Drehzahl, der Verbrennungsschwerpunkt und der Verbrennungsbeginn gemessen werden können, so daß alle für eine umfangreiche Motorregelung benötigten Daten von einem einzigen Sensor geliefert werden können. Gelöst wird diese Aufgabe durch die kennzeichnenden Merkmale des Anspruchs 1.

**Vorteile der Erfindung**

Die erfindungsgemäße Einrichtung mit den kennzeichnenden Merkmalen des Anspruchs 1 bzw. 2 hat gegenüber den bekannten Einrichtungen den Vorteil einer schnellen und spezifischen Erfassung einer wichtigen Schadstoffkomponente, nämlich des Rußes des Verbrennungsmotors. Zusätzlich werden alle weiteren, für die Regelung des Verbrennungsmotors erforderlichen Größen mit einer einzigen Sonde ermittelt.

Da die Ionenstromsonde bei Feldstärken von unter 300 V pro Zentimeter arbeiten und außerdem eine hohe Empfindlichkeit und Ansprechgeschwindigkeit aufweist, ist das Verfahren in der Lage, einzelne Brennvorgänge aufzulösen und damit Auskunft zu geben über Brennbeginn und Brenndauer sowie Brennablauf bzw. Brennaussetzer. Der für die Durchführung des Verfahrens erforderliche Sensor ist eine modifizierte Glühstiftkerze, die in kleineren Dieselmotoren ohnehin vorhanden ist. Bei direkt einspritzenden Dieselmotoren, die keine solche Starthilfe besitzen, ist es jedoch möglich, die Spritzdüse so zu modifizieren, daß damit auch Sondenfunktionen wahrgenommen werden können, so daß zusätzliche Bohrungen für spezielle Sonden nicht notwendig sind.

Besonders vorteilhaft ist die Erfassung des in einem Dieselmotor vorhandenen Rußes, die Möglichkeit der berührungslosen Drehzahlmessung von Verbrennungsmotoren, die Möglichkeit der Regelung des Spritzbeginns in Dieselmotoren sowie auch die Möglichkeit der Regelung der Abgasrückführung (ARF).

Durch die hohe Temperatur, wie sie bei den Verbrennungsvorgängen in Verbrennungsmotoren herrschen, werden ebenso wie durch energiereiche Strahlung Gasionen gebildet, die hocherhitzten Gasen eine elektrische Leitfähigkeit verleihen, die der Ladungsträgerdichte direkt proportional ist. Welche Art Ladungsträger dabei entstehen, hängt entscheidend von der Temperatur und von den Ionisierungspotentialen der vorhandenen Moleküle ab. Bei entsprechender Lage von Temperatur und Ionisierungspotentialen ist es grundsätzlich möglich, bestimmte Gasbestandteile über die Leitfähigkeit des ionisierten Gases nachzuweisen. Voraussetzung dafür ist, daß vornehmlich ein Bestandteil des Gemisches in ionisierter Form vorliegt und zur elektrischen Leitfähigkeit des Plasmas beiträgt. Die Leitfähigkeit muß danach in eindeutiger Weise von der Konzentration der betreffenden Gasionen bzw. -moleküle abhängen und nach Eichung quantitative Aussagen darüber gestatten.

**Tabelle**

Ionisierungspotentiale anorganischer und organischer Moleküle

| Anorganische Moleküle | | eV |
|---|---|---|
| $H_2$ | $H_2^+$ + e | 15,4 |
| $O_2$ | Sauerstoff | 12,2 |
| $N_2$ | Stickstoff | 16,8 |
| $H_2O$ | Wasser | 12,59 |
| CO | Kohlenmonoxid | 14,30 |
| $CO_2$ | Kohlenoxid | 13,79 |
| NO | Stickstoffmonoxid | 9,5 |
| $NO_2$ | Stickstoffdioxid | 11,0 |

Organische Moleküle

Paraffine

| $CH_4$ | Methan | 12,98 |
|---|---|---|
| $C_2H_6$ | Äthan | 11,65 |
| $C_4H_{10}$ | Butan | 10,63 |
| $C_{10}H_{22}$ | Decan | 10,19 |

Aromaten

| $C_6H_6$ | Benzol | 9,25 |
|---|---|---|
| $C_{10}H_8$ | Naphthalin | 8,12 |
| $C_{14}H_{10}$ | Anthracen | 7,23 |

Im Falle der thermischen Ionisation ist der Ionisationsgrad der Komponenten in Abhängigkeit von Temperatur, Teilchendichte und Ionisierungsenergie berechenbar. Danach werden insbesondere für den Ruß aufgrund seiner relativ niedrigen Ionisierungsenergie hohe Ionisierungsgrade unter Bedingungen, wie sie in einem Dieselmotor herrschen, erhalten, so daß über die Leitfähigkeit des Brenngases eine Erfassung des Rußes möglich ist. Das folgt einerseits aus den Ionisierungspotentialen der wichtigsten Brenngasbestandteile des Dieselmotors, wie sie in der Tabelle "Ionisierungspotentiale anorganischer und organischer Moleküle" unter "Anorganische Moleküle" angeführt sind. Andererseits läßt sich aus der Tatsache, daß bei aliphatischen und aromatischen Kohlenwasserstoffen die Ionisierungsenergie mit zunehmender Molekülgröße abnimmt, wie in der Tabelle unter "Organische Moleküle" ablesbar ist, und man sich Ruß im Prinzip als ein fortgeschrittenes Glied einer aromatischen Kondensationsreihe vorstellen kann, wofür auch der Gehalt an Wasserstoff spricht, eine Ionisierungsenergie abschätzen, die um 2 bis 3 eV unter der des Anthrazens von 7,23 eV liegen sollte, obwohl genauere Werte, wohl wegen der Unterschiede im Kondensationsgrad und in der genauen Zusammensetzung des Rußes, nicht bekannt sind. Es läßt sich jedoch zeigen, daß selbst mit dem höheren Schätzwert der Ionisierungsenergie von 5 eV und unter Berücksichtigung der Konzentrationsverhältnisse sich noch ein für die Rußerfassung ausreichender Potentialabstand zu der nächsten leicht ionisierenden Komponente NO ergibt.

Auch bei günstiger Lage der Ionisierungsenergien ist ein quantitativer Komponenten-Nachweis aber nur möglich, wenn eine geeignete Meßspannung verwendet wird, daß heißt, daß die Spannung im Sättigungsstromgebiet für die unselbständige Gasentladung liegen muß, um eine spannungsbedingte Ionisation mit lawinenartiger Vermehrung der Ladungsträger zu vermeiden, die zur Folge hätte, daß die elektrische Leitfähigkeit des Plasmas nicht mehr allein von der thermischen Ionisation einer Komponente abhängt. Ionenstrommessungen sind zwar auch dann noch möglich, sie gestatten aber nur die bislang üblichen qualitativen Aussagen über den Brennablauf, wie die Feststellung des Zündzeitpunktes, ob Brennaussetzer aufträten oder eine klopfende Verbrennung vorliegt.

Ein Problem stellen bei allen Messungen im Motor die erheblichen Temperatur- und Konzentrationsunterschiede dar, die in räumlicher und zeitlicher Hinsicht so ausgemittelt werden müssen, daß für den jeweiligen Arbeitsvorgang repräsentative Mittelwerte erhalten werden. Das geschieht durch Verwendung eines großen Meßvolumens und durch Integration der Strom- bzw. Spannungsverläufe. Dabei läßt sich die Meßempfindlichkeit verbessern, wenn den stark unterschiedlichen Driftgeschwindigkeiten von positiven Gasionen, Gegenionen und Elektronen dadurch Rechnung getragen wird, daß zur Entladung der langsamen positiven Gasionen eine größere negative Elektrode eingesetzt wird.

## Zeichnung

Ein Ausführungsbeispiel der Erfindung ist in der Zeichnung dargestellt und in der nachfolgenden Beschreibung näher erläutert. Es zeigen Figur 1 den Schnitt durch eine Wirbelkammer eines Dieselmotors und Figur 2 eine graphische Darstellung, in der die mittlere Strommenge pro Einzelsignal (Brennvorgang) gegen die Rußkonzentration bei verschiedenen Drehzahlen aufgetragen ist. Figur 3 schließlich zeigt als Beispiel eine oszillographische Aufnahme der elektrischen Leitfähigkeit in Abhängigkeit vom Kurbelwinkel bei einem Dieselmotor bei Vollast, einer Drehzahl von 2 000 Upm und einem Rußgehalt von 0,31 mg/l.

## Beschreibung des Ausführungsbeispiels

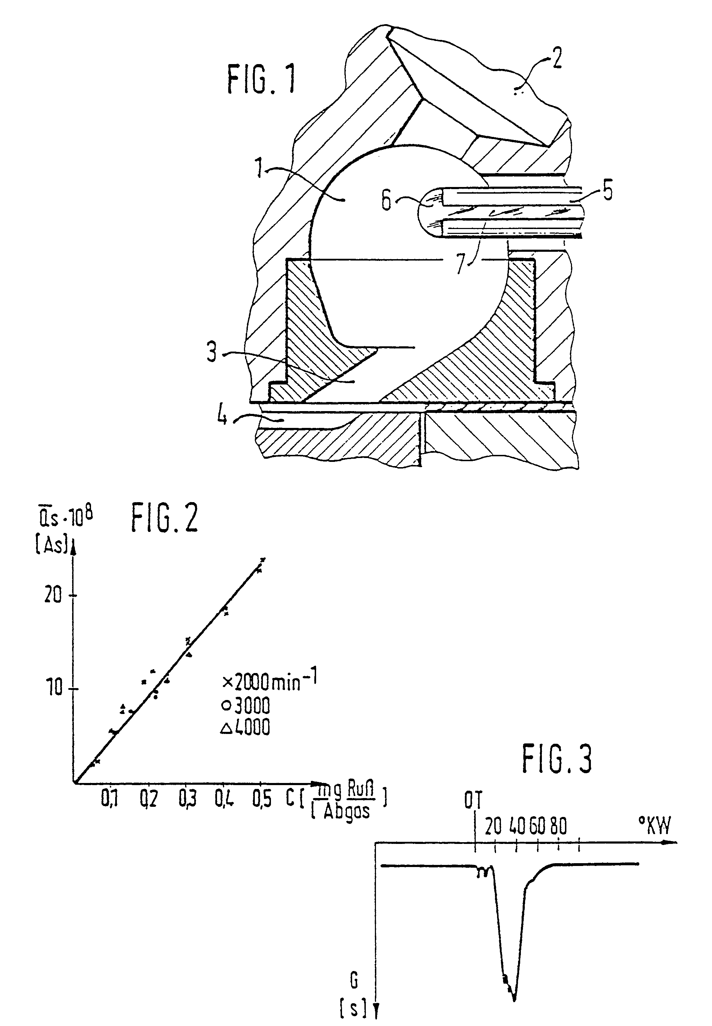

In Figur 1 ist im Schnitt die Wirbelkammer 1 eines Dieselmotors mit der Einspritzdüse 2, dem Schußkanal zur Hauptverbrennungskammer 3 sowie die Hauptverbrennungskammer 4 dargestellt. In die Wirbelkammer 1 ragt z. B. eine keramische Glühstiftkerze 5 hinein, die an ihrer Kuppe eine elektrisch leitfähige Schicht 6 aus Platin trägt, an die sich eine elektrische Leiterbahn 7 zur Kontaktierung der leitfähigen Schicht 6 anschließt. Zwischen der elektrisch leitfähigen Kuppe 6 und der Wandung der Wirbelkammer 1 liegt eine Gleichspannung von 250 V an. In dem Stromkreis zur Messung der elektrischen Leitfähigkeit liegt ein Meßwiderstand von 10 k Ω, so daß das Signal für die elektrische Leitfähigkeit als Spannungsabfall an diesem Meßwiderstand erhalten und ausgewertet wird. Eine zusätzliche Verstärkerschaltung ermöglicht eine Integration der Signale, so daß gleichzeitig damit die Strommenge in Abhängigkeit von der Zeit bzw. von der Signalzahl registriert werden konnte.

Erfolgt die Auswertung oszillographisch (Fig. 3), so ist eine eindeutige Korrelation zwischen den elektrischen Signalen und den Rußgehalten des Abgases erkennbar und es zeigt sich, daß diese Meßvorrichtung sehr schnell und trägheitslos auf die mit Rußentwicklung verbundenen Vorgänge im Brennraum anspricht. Wie aus Figur 2 hervorgeht, wird die Beziehung auch in quantitativer Hinsicht gut erfüllt, wenn nach elektronischer Integration der Signale die mittlere Strommenge pro Einzelsignal gegen die Rußkonzentration aufgetragen wird. Man sieht, daß die Werte für 2 000, 3 000 und 4 000 Umdrehungen pro Minute kaum voneinander abweichen.

Wie die oszillographischen Aufnahmen zeigen (Fig. 3), ist das Verfahren aufgrund seiner trägheitslosen Arbeitsweise und hohen Empfindlichkeit imstande, einzelne Brennvorgänge aufzulösen und damit anhand der Rußentwicklung im Brennraum Auskunft zu geben über den Brennablauf. Daraus folgt u. a. die Möglichkeit, den Verbrennungsschwerpunkt als den Zeitpunkt maximaler Rußentwicklung, der mit der maximalen Lichtemission übereinstimmt, festzustellen und mit Hilfe einer Spritzbeginn-Regelung (Spritzversteller) auf bestimmte Zeitpunkte bzw. ° KW (Kurbelwinkel) zu legen, z. B. 10° KW nach oberem Zündtotpunkt (oT) als einer optimalen Einstellung. Der Verbrennungsschwerpunkt kann aber auch je nach Umständen oder Erfordernissen so verändert werden, daß dadurch das Motorverhalten in bestimmten Betriebszuständen, wie z. B. Warmlauf, Hochlauf oder Schiebebetrieb, verbessert wird, gewisse Emissionen, wie Geräusch, Schadstoffe (HC, NOx, Ruß) gezielt verringert oder der spezifische Kraftstoffverbrauch minimiert wird. Zweckmäßigerweise wird für die Regelaufgaben ein aus allen Zylindern gemitteltes Signal verwendet, um die motorbedingten Brennunregelmäßigkeiten auszugleichen.

Ein weiterer verfahrensmäßiger Vorteil ist, daß aus den leicht zu verarbeitenden elektrischen Signalen die Drehzahl des Motors ermittelt werden kann und alle genannten Meßfunktionen bei Verwendung modifizierter Glühstiftkerzen ohne großen Mehraufwand mit der Startfunktion kombinierbar sind.

Schließlich läßt sich mit dem angegebenen Verfahren auch die Abgasrückführung regeln, die als wirksame Maßnahme zur Begrenzung der NOx-Emission gilt und für die heute ein Luftmengenmesser benötigt wird. Viel vorteilhafter als diese indirekte Methode, bei der aus der angesaugten Luftmenge auf die für die ARF-Rate maßgebende CO- bzw. Rußkonzentration geschlossen wird, wäre die direkte Messung einer der beiden Komponenten. Mit dem erfindungsgemäßen Verfahren steht jetzt ein direktes und kontinuierliches Meßverfahren zur Verfügung, mit dem Ruß schnell und empfindlich bereits im Motor nachgewiesen werden kann und das damit für eine Regelung der ARF-Rate geeignet ist. Im Vergleich zur Luftmengenmessung hat das erfindungsgemäße Verfahren den Vorteil, daß es sich unmittelbar an einer Schadstoffkomponente orientiert.

Aufgrund der multifunktionellen Eigenschaften des verwendeten Sensors sind alle Voraussetzungen für eine umfassende Optimierung des Dieselmotors hinsichtlich Kraftstoffverbrauch erfüllt.

## Patentansprüche

1. Einrichtung zur Messung und Regelung von Betriebsdaten von Verbrennungsmotoren unter Ausnutzung der Ionisierung von Gasen bei hohen Temperaturen, über eine Messung der elektrischen Leitfähigkeit des im Brennraum des Verbrennungsmotors vorhandenen, wenigstens teilweise ionisierten Gases, mittels einer Spannung, die zwischen einem in den Brennraum hineinragenden Sensor und der Brennraumkammer liegt, wobei die erhaltenen Meßsignale auf die entsprechenden Betriebsdaten hin ausgewertet werden und der Steuerung von Betriebsgrößen dienen, dadurch gekennzeichnet, daß die Spannung so gewählt wird, daß im Brennraum keine Stoßionisation auftritt, insbesondere daß sie zu einer Feldstärke von unter 300 Volt pro Zentimeter führt und daß das maximale Meßsignal je Brennablauf zur Ermittlung und Regelung des Verbrennungsschwerpunktes oder zur Regelung des Spritzbeginns oder zur Regelung der Abgasrückführung verwandt wird.

2. Einrichtung zur Messung und Regelung von Betriebsdaten von Dieselmotoren unter Ausnutzung der Ionisierung von Gasen bei hohen Temperaturen, über eine Messung der elektrischen Leitfähigkeit des im Brennraum des Verbrennungsmotors vorhandenen, wenigstens teilweise ionisierten Gases, mittels einer Spannung, die zwischen einem in den Brennraum hineinragenden Sensor und der Brennraumkammer liegt, wobei die erhaltenen Meßsignale auf die entsprechenden Betriebsdaten hin ausgewertet werden und der Steuerung von Betriebsgrößen dienen, dadurch gekennzeichnet, daß die Spannung so gewählt wird, daß im Brennraum keine Stoßionisation auftritt, insbesondere daß sie zu einer Feldstärke von unter 300 Volt pro Zentimeter führt, daß durch Integration des Strom- bzw. Spannungsverlaufs die bei jedem Brennvorgang gebildete Rußmenge bestimmt wird und zur Regelung der entsprechenden Betriebsgrößen herangezogen wird, vorzugsweise zur Regelung des Spritzbeginns oder zur Regelung der Abgasrückführung.

## Claims

1. Device for measuring and regulating operating data of internal combustion engines by utilising the ionisation of gases at high temperatures, via a measurement of the electrical conductivity of the, at least partially, ionised gas present in the combustion chamber of the internal combustion engine, by means of a voltage which is applied between a sensor projecting into the combustion chamber and the combustion chamber, the measuring signals obtained being evaluated to establish the corresponding operating data and being used to control operating variables, characterised in that the voltage is selected in such a way that no impact ionisation occurs in the combustion chamber, in particular that the voltage results in a field strength of below 300 Volts per centimetre and in that the maximum measuring signal air combustion per sequence is used for determining and regulating the peak combustion point or for regulating the start of injection or for regulating the recycling of exhaust gases.

2. Device for measuring and regulating operating data of diesel engines by utilising the ionisation of gases at high temperatures, via a measurement of the electrical conductivity of the, at least partially, ionised gas present in the combustion chamber of the internal combustion engine, by means of a voltage which is applied between a sensor projecting into the combustion chamber and the combustion chamber, the measuring signals obtained being evaluated to establish the corresponding operating data and being used to control operating variables, characterised in that the voltage is selected in such a way that no impact ionisation occurs in the combustion chamber, in particular that it leads to a field strength of below 300 Volts per centimetre, in that, by integration of the current or voltage curve, the amount of rust formed during each combustion process is determined and utilised for regulating the corresponding operating variables, preferably for regulating the start of injection or for regulating the recycling of exhaust gases.

## Revendications

1. Installation pour mesurer et réguler les paramètres de fonctionnement de moteurs à combustion interne en utilisant l'ionisation de gaz à des températures élevées, en mesurant la conductivité électrique du gaz au moins partiellement ionisé contenu dans la chambre de combustion du moteur à combustion interne, à l'aide d'une tension appliquée entre un capteur venant en saillie dans la chambre de combustion et la chambre de combustion elle-même, les signaux de mesure obtenus étant exploités en fonction des paramètres de fonctionnement correspondants et servant à la commande des grandeurs de fonctionnement, installation caractérisée en ce qu'on choisit la tension pour qu'il ne se produise pas d'ionisation brutale dans la chambre de combustion, notamment pour aboutir à une intensité de champ inférieure à 300 V/cm et pour que le signal maximum de mesure par phase de combustion soit utilisé pour déterminer et réguler le centre de gravité de la combustion ou réguler le début de l'injection ou réguler la réinjection des gaz d'échappement.

2. Installation pour mesurer et réguler les paramètres de fonctionnement de moteurs Diesel, en utilisant l'ionisation des gaz aux températures élevées, par une mesure de la conductivité électrique du gaz au moins partiellement ionisé se trouvant dans la chambre de combustion du moteur à combustion, en utilisant une tension appliquée entre un capteur venant en saillie dans la chambre de combustion et la chambre de combustion elle-même, les signaux de mesure obtenus étant exploités pour les paramètres de fonctionnement correspondants, et servant à commander les grandeurs de fonctionnement, installation caractérisée en ce qu'on choisit la tension pour qu'il ne se produise pas d'ionisation brutale dans la chambre de combustion, notamment pour qu'elle aboutisse à une intensité de champ inférieure à 300 V/cm, en ce que par intégration de la courbe d'intensité ou de tension, on détermine la quantité de suies formée au cours de chaque phase de combustion et on utilise cette grandeur pour réguler les paramètres de fonctionnement correspondants, de préférence en régulant le début de l'injection ou en régulant la réinjection des gaz d'échappement.

FIG. 1

FIG. 2

FIG. 3